# EUROPEAN PATENT APPLICATION

(11) **EP 4 353 083 A1**
(43) Date of publication of application: **17.04.2024**
(21) Application number: 22306553.3
(22) Date of filing: 13.10.2022
(51) Int. Cl.: A01N 65/40, A01P 7/04, A01N 25/30, A01N 25/02, A01N 27/00

(54) **MOSQUITO LARVICIDAL COMPOSITIONS**

(71) Applicant: TotalEnergies OneTech, 92400 Courbevoie (FR)
(72) Inventor: SWOBODA, Benjamin, 92400 COURBEVOIE (FR); SAWANT, Sayali, 400710 NAVI MUMBAI (IN); CHATTERJEE, Victor, 400710 NAVI MUMBAI (IN); PERUMALSAMY, Jayachandran, 400710 NAVI MUMBAI (IN)
(74) Representative: Lavoix

(57) **Abstract**

The present invention relates to the use of a composition comprising:
- at least one oil having a kinematic viscosity at 40°C from 1.5 mm²/s to 4 mm²/s, a flash point from 80°C to 150°C and a pour point from -80°C to -50°C, having a boiling point in the range of from 200°C to 350°C,
wherein the amount of said oil is greater than 94% by weight in relation to the total weight of said composition, and
- at least one surfactant selected from the amphiphilic surface-active agents, wherein the amount of said surfactant is from 0.25% to 6% by weight in relation to the total weight of said composition,
for killing mosquito larvae.

## Description

The present invention concerns mosquito larvicidal compositions, and uses thereof for killing mosquito larvae.

Mosquito is a common insect in the family Culicidae. Mosquitoes go through four stages in their life-cycle: egg, larva, pupa, and adult or imago. Adult females lay their eggs in standing water, which can be a salt-marsh, a lake, a puddle, a natural reservoir on a plant, or an artificial water container such as a plastic bucket. The first three stages are aquatic and in the last 5-14 days, depending on the species and the ambient temperature, eggs hatch to become larvae, then pupae. The adult mosquito emerges from the pupa as it floats on the water surface. Adults live for 4-8 weeks. Larvae breathe through spiracles located on the eighth abdominal segment, or through a siphon, and therefore must come to the surface of water frequently.

Mosquitoes are a vector agent that carries disease-causing viruses and parasites from person to person without being infected with the disease themselves. Some of them feed on humans and are a vector of malaria and mosquito control is a very effective way of reducing the incidence of malaria. The principal mosquito borne diseases are the viral diseases yellow fever, dengue fever and Chikungunya, transmitted mostly by the *Aedes aegypti.* Mosquitoes are estimated to transmit disease to more than 700 million people annually in Africa, South America, Central America, Mexico and much of Asia with millions of resulting deaths. At least 2 million people annually die of these diseases.

There are many methods used for mosquito control. Depending on the situation, source reduction (e.g. removing stagnant water), biocontrol (e.g. importing natural predators such as dragonflies), trapping, use of Mosquito Larvicidal Oil (MLO) for killing mosquito larvae and pupae in the aquatic stage itself and/or insecticides to kill larvae and/or adults may be used.

The aim of the present invention to provide a bio-sourced, biodegradable solution which leads to or at least decrease the population of mosquitoes who are vectors of dangerous diseases from the larval stage, by developing a surface spray oil which kills mosquito larva efficiently.

The aim of the present invention is to provide a composition killing mosquitoes in their larval stage, when they are even least harmful.

The aim of the present invention is to provide a composition devoid of mineral oil, being non toxic for the environment, thus comprising a bio-sourced oil.

The aim of the present invention is to provide a composition efficient for killing mosquitos larvae, with a mortality rate of about 100% on the mosquito larvae within 2 days, and with a high mortality rate on the mosquito larvae within 24 hours, preferably greater than 85% for *Aedes aegypti,* preferably greater than 90% for *Anopheles stephensi,* and preferably greater than 90% for *Culex quinquifasciatus.*

Thus, the present invention relates to the use of a composition comprising:
- at least one oil having a kinematic viscosity at 40°C from 1.5 mm²/s to 4 mm²/s, a flash point from 80°C to 150°C and a pour point from -80°C to -50°C, having a boiling point in the range of from 200°C to 350°C,
   wherein the amount of said oil is greater than 94%, preferably greater than 98%, by weight in relation to the total weight of said composition, said amount being preferably from 98% to 99.75% by weight in relation to the total weight of said composition, and
- at least one surfactant selected from the amphiphilic surface-active agents,
   wherein the amount of said surfactant is from 0.25% to 6% by weight in relation to the total weight of said composition,
   for killing mosquito larvae.

The kinematic viscosity at 40°C of the oil is for example measured according to ASTM D445 standard.

Preferably, the oil according to the invention has a kinematic viscosity at 40°C from 1.6 mm²/s to 4 mm²/s, from 1.6 mm²/s to 3.5 mm²/s, preferably from 2 mm²/s to 4 mm²/s, preferably from 2.5 mm²/s to 3.5 mm²/s.

The flash point of the oil is for example measured according to ASTM 93 standard.

Preferably, the flash point of the oil is from 80°C to 130°C, preferably from 100°C to 130°C, more preferably from 120°C to 130°C.

The pour point of the oil is for example measured according to ASTM D97 standard.

Preferably, the pour point of the oil is from -65°C to -50°C, and more preferably from -60°C to -50°C.

The boiling point of the oil is for example measured according to ASTM D86 as well as D2887 standard.

Preferably, the boiling point of the oil is from 210°C to 345°C, more preferably from 230°C to 345°C, and even more preferably from 250°C to 300°C.

According to a preferred embodiment, the oil as defined above has a kinematic viscosity at 40°C from 2 mm²/s to 4 mm²/s, a flash point from 80°C to 150°C and a pour point from -80°C to -60°C, and a boiling point in the range of from 200°C to 350°C.

According to an embodiment, the oil of the composition as defined above has a kinematic viscosity at 40°C from 2 mm²/s to 4 mm²/s, a flash point around 126°C and a pour point of -60°C, and also has a boiling point in the range of from 226°C to 316°C.

According to an embodiment, the amount of iso-paraffins of the oil of the composition used according to the invention is greater than 80% by weight in relation to the total weight of said oil.

According to an embodiment, in the oil as defined above, the amount of naphtenes is less than 20% by weight in relation to the total weight of said oil.

According to an embodiment, in the oil as defined above, the amount of aromatics is less than 50 ppm by weight in relation to the total weight of said oil, and even preferably less than 20 ppm by weight in relation to the total weight of said oil. This amount is for example measured by the standard method ASTM UOP 495.

According to an embodiment, the amount of iso-paraffins of the oil of the composition used according to the invention is greater than 80% by weight in relation to the total weight of said oil, the amount of naphtenes is less than 20% by weight in relation to the total weight of said oil, and wherein the amount of aromatics is less than 50 ppm, and even preferably less than 20 ppm, by weight in relation to the total weight of said oil. These amounts are for example measured according to ASTM D5443 standard.

Preferably, the oil as defined above is mainly isoparaffinic and devoid of naphthene or aromatic contents.

The oil in the composition as defined above is preferably sustainable, safe and odourless. It is used as an alternative to conventional mineral oils. Such oil thus includes for example renewable isoalkanes derived from 100% vegetable origin feedstocks. This kind of oils has preferably a low pour point down to -80°C and a high flash point ranging up to 150°C and also preferably a boiling point ranging from 200°C to 350°C.

The oil according to the invention is preferably characterized by its low aromatic content and classified as readily biodegradable.

According to an embodiment, the oil as defined above is obtained from a bio-source. Preferably, the oil as defined above is a vegetal oil, and more preferably is derived from palm oil.

Preferably, the oil has a biodegradability at 28 days of at least 60% as measured according to the OECD 306 standard.

According to an embodiment, the composition used according to the invention contains the amount of the surfactant is from 0.25% to 2% by weight in relation to the total weight of said composition.

The surfactant as defined above is preferably a surface-active agent that will reduce the surface tension of the oil and thereby will increase its spreading and wetting properties.

Preferably, this surfactant is selected from FDA approved surfactants, and thus facilitates the even spreading of the oil on the surface of the water.

The surface-active agent is amphiphilic meaning the corresponding molecule is partly hydrophilic (water-soluble) and partly lipophilic (soluble in lipids, or oils).

According to an embodiment, the surfactant has a HLB from 2 to 6.

As preferred surfactants, one may cite ABA-type copolymers.

Preferably, the surfactant of the composition according to the invention is a poly(ethylene oxide)-10-hydroxy octadecanoic acid block copolymer.

In particular, the composition used according to the invention comprises the commercial product Hypermer 1083 (Croda) as surfactant.

The surfactant is preferably an ABA copolymer emulsifier having a molecular weight of 2,041 g/mol with Hydrophilic-Lipophilic Balance (HLB) Ratio in the range from 4.3 to 5.

The surfactant as defined above allows preferably enhancing the spreadability of the oil on the water surface, which does not affect its ecological toxicity. The surfactant has been previously used for water treatment applications and is even FDA approved.

Preferably, the composition is devoid of any mineral oil and does not contain any petroleum fraction.

According to an embodiment, the composition according to the invention has a biodegradability at 28 days of at least 60% as measured according to the OECD 306 standard.

The compositions used according to the invention have many advantages, in particular they are free from toxic chemicals/pesticides, they have an excellent coverage on the water surface, they spread quickly over stagnant water surface, and/or they do not leave a dark oily film.

Moreover, the main ingredients in the compositions used according to the invention have no ecological toxicity, and are thus safe for aquatic life.

Preferably, the mosquito larvae are *Aedes* mosquito larvae, *Anopheles* mosquito larvae, or *Culex* mosquito larvae, preferably *Aedes aegypti* mosquito larvae, *Anopheles stephensi* mosquito larvae, or *Culex quinquifasciatus* mosquito larvae.

The present invention also relates to a process for killing mosquito larvae, in particular in an aqueous medium, comprising the application of the composition as defined above, on a surface of water.

According to an embodiment, the composition is sprayed or poured on the surface of water.

According to an embodiment, the composition is sprayed or poured on open water-bodies such as ponds, canals, or ditches where there is probability of breeding of mosquito larvae.

Preferably, once the composition is sprayed or poured, the mosquitoes do not lay eggs on the oiled surface of water.

The composition used according to the invention is efficient for killing mosquito larvae and gives preferably a very high mortality rate (>90%) against *Anopheles stephensi,* (>85) *Aedes aegypti* mosquito larvae, (>90%) for *Culex quinquifasciatus* at 24 hours of application.

The present invention also relates to the composition as defined above as such, wherein the oil and the surfactant are as defined above.

Thus, the present invention also relates to a composition comprising:
- at least one oil having a kinematic viscosity at 40°C from 1.5 mm²/s to 4 mm²/s, a flash point from 80°C to 150°C and a pour point from -80°C to -50°C, having a boiling point in the range of from 200°C to 350°C,
   wherein the amount of said oil is greater than 94%, preferably greater than 98%, by weight in relation to the total weight of said composition, said amount being preferably from 98% to 99.75% by weight in relation to the total weight of said composition, and
- at least one surfactant selected from the amphiphilic surface-active agents,
   wherein the amount of said surfactant is from 0.25% to 6% by weight in relation to the total weight of said composition.

### EXAMPLES

### Preparation of compositions according to the invention

In a clean beaker, weighed amount of oil was taken. To it the required amount of surfactant was added dropwise. They were mixed in the beaker using a magnetic stirrer at 800 rpm for 15 minutes.

The below oils are used as oil in the compositions according to the invention:

| Parameter | Unit | Oil 1 | Oil 2 | Oil 3 |
|---|---|---|---|---|
| Density at 15°C | kg/m³ | 780.3 | 783.3 | 764 |
| PMCC Flash point | °C | 125 | 128 | 84 |
| Pour Point | °C | -60 | -54 | -54 |
| Kinematic Viscosity at 40°C | cSt | 2.944 | 3.207 | 1.61 |
| Monoaromatics | ppm | <20 | <20 | <20 |
| Initial Boiling point | °C | 266.6 | 237 | 211 |
| Final Boiling Point | °C | 296.6 | 343 | 244 |
| Biodegradability (OECD 306 standard) | - | 83% at 28 days | n.d. | n.d. |

As surfactant, the compositions comprise Hypermer 1083 surfactant (Croda) in various amounts.

The following compositions C1 to C7 were prepared (comprising one oil (oil 1 or oil 2) and a surfactant):

| | Compositions according to the invention | | | | |
|---|---|---|---|---|---|
| | C1 | C2 | C3 | C4 | C5 |
| Weight amount of oil 1 (%) | 99.5 | 99 | 98 | 97 | 94 |
| Weight amount of surfactant (%) | 0.5 | 1 | 2 | 3 | 6 |

| | Compositions according to the invention | |
|---|---|---|
| | C6 | C7 |
| Weight amount of oil 2 (%) | 99.5 | 99 |
| Weight amount of surfactant (%) | 0.5 | 1 |

The below table presents the physical properties of compositions C1 to C5 as defined above.

| | **Unit** | **Oil 1 pure** | **C1** | **C2** | **C3** | **C4** | **C5** |
|---|---|---|---|---|---|---|---|
| Density @ 30C | kg/m³ | 780.3 | 771.19 | 772.01 | 773.75 | 774.04 | 780.37 |
| KV @21.1 °C | cSt | 4.617 | 4.7448 | 4.824 | 4.9848 | 5.1479 | 5.6932 |
| KV@40°C | cSt | 2.944 | 3.1006 | 3.144 | 3.2398 | 3.344 | 3.6678 |
| Flash point | °C | 125 | 125 | 125 | 131 | 131 | 127 |
| Spreading Pressure | N/m | <4.6×10⁻² | >4.6×10⁻² | >4.6×10⁻² | >4.6×10⁻² | >4.6×10⁻² | >4.6×10⁻² |
| Stability of the Film | Visual | formed droplets | unbroken film for>2 hrs | unbroken film for>2 hrs | unbroken film for>2 hrs | unbroken film for>2 hrs | unbroken film for>2 hrs |

| | **Unit** | **C6** | **C7** |
|---|---|---|---|
| Density @ 30C | kg/m³ | 774.5 | 774.16 |
| KV @21.1 °C | cSt | 5.3189 | 5.2935 |
| KV@40°C | cSt | 3.4341 | 3.4331 |
| Flash point | °C | ~128 | ~128 |
| Spreading Pressure | N/m | >4.6×10⁻² | >4.6×10⁻² |
| Stability of the Film | Visual | unbroken film for>2 hrs | unbroken film for>2 hrs |

The surfactant was used in proportions ranging from 0.5% to 6% by weight. The above table shows results that make the compositions eligible to be used as a spreading oil for larvicidal action. For example it has a Kinematic Viscosity @21.1 °C <10 cSt, and a flash point > 65°C which makes it beneficial for this application.

Moreover, it has a spreading pressure above 4.6 × 10⁻² N/m, which allows it to be easily used as a spreading oil of Grade-I level for larvicidal applications.

The stability of the film however remains intact for the formulations with the surfactant but fails for the pure oil.

Out of these formulations, 0.5% is chosen as the optimum as it requires less amount of the surfactant and less miscibility of the water and oil layer. Also, the larvicidal toxicity test was carried out for the formulations involving 0.5% and 1%.

The test results as shown below demonstrate that an optimum quantity of 0.5% of surfactant is good enough to reach a larvicidal toxicity of >75% for Aedes species, >90% for Anopheles species for an application of 12 ml per square meter.

### Larvicidal activity of compositions according to the invention

To test the larvicidal activity of the compositions according to the invention, glass beakers of 500 ml capacity were used. The early 4th instar larvae (twenty-five numbers) of the required mosquito species were transferred from the standard colony to each of 500 mL glass beakers containing 250 mL of distilled water. After removing the dead volume from fifteen beakers containing 250 ml, the recommended dose (0.02, 0.04 & 0.05 ml which corresponds to an equivalent dosage of 4.8 ml/m², 9.6 ml/m² and 12.0 ml/m² in field respectively) of test item was gently added with the help of micropipette on the surface of water to spreading the test item film without any turbulence.

Equal number of control beakers were kept with 250ml water containing 25 larva. No feed was added for larvae.

Three sets of experiments were conducted with five replications for each concentration against two species of mosquito larvae.

Larval mortality was recorded at 24, 48 and 72 hours of exposure for each test item and control. Moribund larvae were counted and recorded as dead larvae for calculating percentage mortality.

The tests where the pupation of larvae was less than 10% in all concentrations was only considered as valid. In the performed tests, the control mortality was less than 5%, hence the test was considered as valid and corrected mortality was not adjusted by using Abbott's formula.

The tests were carried out in accordance to the WHO specification for "Larvicidal Oil without Insecticide." [WHO/SIF/23.R1]

Compositions C1 and C3 according to the invention (comprising oil 1) have been tested and the obtained results are included in the below table.

| Test Sample | | *Aedes aegypti* | | | *Anopheles stephensi* | | | *Culex quinquifasciatus* | |
|---|---|---|---|---|---|---|---|---|---|
| | Equivalent application dosage (ml/m²) → | 4.8 | 9.6 | 12 | 4.8 | 9.6 | 12 | 9.6 | 12 |
| C1 | 24 hrs | **80.4** | **84.4** | **87.6** | 85.8 | 88.9 | **91.6** | **90.7** | **95.1** |
| | 48 hrs | 93.8 | 95.6 | 98.2 | 97.3 | 100 | 100 | 100 | 100 |
| | 72 hrs | 100 | 100 | 100 | 100 | NA | NA | NA | NA |
| C3 | 24 hrs | 62.10 | **85.60** | **95.60** | 69.60 | 87.70 | **96.90** | 77.30 | **91.60** |
| | 48 hrs | 84.30 | 100.00 | 100.00 | 87.50 | 100.00 | 100.00 | 100.00 | 100.00 |
| | 72 hrs | 100.00 | 100.00 | 100.00 | 100.00 | 100.00 | 100.00 | NA | NA |

Compositions C6 and C7 according to the invention (comprising oil 2) have been tested and the obtained results are included in the below table.

| Percent (%) Mortality | | | | | | | |
|---|---|---|---|---|---|---|---|
| Test Sample | Mosquito Species → | *Aedes aegypti* | | | *Anopheles stephensi* | | |
| | Equivalent application dosage (ml/m²) → | 4.8 | 9.6 | 12 | 4.8 | 9.6 | 12 |
| C6 | 24 hrs | 71.1 | 74.7 | **87.6** | 76.4 | 79.1 | 82.7 |
| | 48 hrs | 89.3 | 94.2 | 98.2 | 93.3 | 100 | 100 |
| | 72 hrs | 100 | 100 | 100 | 100 | 100 | 100 |
| C7 | 24 hrs | 65.6 | 74.4 | **90.7** | 70.4 | 79.5 | 84.9 |
| | 48 hrs | 87.7 | 90.1 | 98.2 | 91.2 | 96.8 | 99.1 |
| | 72 hrs | 95.5 | 100.0 | 100 | 99.7 | 100.0 | 100 |

The results in the above table show that the compositions according to the invention are efficient for killing mosquito larvae, in particular from *Aedes aegypti* and *Anopheles stephensi,* but also from *Culex quinquifasciatus.*

### Comparative examples

Results are included below concerning a comparison against a commercially available larvicidal composition by the trade name "FLO-9" (mineral-oil based product) produced by Fine Orgokem Private Limited, India.

| **Percent (%) Mortality** | | | | | | | |
|---|---|---|---|---|---|---|---|
| **Test Sample** | **Species →** | ***Aedes aegypti*** | | | ***Anopheles stephensi*** | | |
| | **Dosage** → | 0.02ml | 0.04 ml | 0.05 ml | 0.02 ml | 0.04 ml | 0.05 ml |
| C1 | **24 hrs** | 80.4 | 84.4 | 87.6 | 85.8 | 88.9 | 91.6 |
| | **48 hrs** | 93.8 | 95.6 | 98.2 | 97.3 | 100 | 100 |
| | **72 hrs** | 100 | 100 | 100 | 100 | 100 | 100 |
| **FLO-9** | **24 hrs** | 12 | 12.9 | 75.6 | 20.4 | 30.7 | 86.7 |
| | **48 hrs** | 27.6 | 44.9 | 87.6 | 40.4 | 69.8 | 99.6 |
| | **72 hrs** | 50.7 | 85.3 | 100 | 63.6 | 94.7 | 100 |

| **Test Sample** | **Species** → | ***Culex quinquifasciatus*** | |
|---|---|---|---|
| | **Concentrations** → | 0.04 ml | 0.05 ml |
| **C1** | **24 hrs** | 90.7 | 95.1 |
| | **48 hrs** | 100 | 100 |
| | **72 hrs** | 100 | 100 |
| **FLO-9** | **24 hrs** | 92.4 | 96.9 |
| | **48 hrs** | 100 | 100 |
| | **72 hrs** | 100 | 100 |

| | | | |
|---|---|---|---|
| (note: A dosage of 0.02 ml corresponds to an actual application dosage of 4.8 per square meter, 0.04 ml corresponds to 9.6 ml per square meter and 0.05 ml corresponds to 12 ml per square meter). | | | |

In conclusion, the efficacy on killing mosquitoes for *Aedes aegypti* and *Anopheles stephensi* is strongly improved: 100% mortality in 48 hours compared to FLO-9 (44.9% for *Aedes aegypti* and 69.8% for *Anopheles stepheni*).

Thus, the efficacy is improved with a bio-sourced and biodegradable oil in comparison to a mineral oil (FLO-9) which lacks performance.

In the formulations proposed in the present application, 75% mortality for *Aedes aegypti* and 90% mortality for *Anopheles stephensi* is reached after 24 hours for 0.05 ml (equivalent to 12.0 ml per square meter), whereas in case of mineral based oils, they are attained after 24 hours for 0.04 ml (equivalent to 9.6 ml per square meter), as reported by some specification sheets. However, the test upon such commercial product (mineral based- FLO-9) gave negative results for even 72 hours.

## Claims

1. The use of a composition comprising:
- at least one oil having a kinematic viscosity at 40°C from 1.5 mm²/s to 4 mm²/s, a flash point from 80°C to 150°C and a pour point from -80°C to -50°C, having a boiling point in the range of from 200°C to 350°C,
wherein the amount of said oil is greater than 94% by weight in relation to the total weight of said composition, and
- at least one surfactant selected from the amphiphilic surface-active agents, wherein the amount of said surfactant is from 0.25% to 6% by weight in relation to the total weight of said composition,
for killing mosquito larvae.

2. The use of claim 1, wherein the amount of iso-paraffins of the oil is greater than 80% by weight in relation to the total weight of said oil, the amount of naphtenes is less than 20% by weight in relation to the total weight of said oil, and wherein the amount of aromatics is less than 50 ppm by weight in relation to the total weight of said oil.

3. The use of claim 1 or 2, wherein the oil is obtained from a bio-source.

4. The use of any one of claims 1 to 3, wherein the oil is derived from palm oil.

5. The use of any one of claims 1 to 4, wherein the composition is devoid of any mineral oil and does not contain any petroleum fraction.

6. The use of any one of claims 1 to 5, wherein the oil has a biodegradability at 28 days of at least 60% as measured according to the OECD 306 standard.

7. The use of any one of claims 1 to 6, wherein the amount of the surfactant is from 0.25% to 2% by weight in relation to the total weight of the composition.

8. The use of any one of claims 1 to 7, wherein the surfactant has a HLB from 2 to 6.

9. The use of any one of claims 1 to 8, wherein the surfactant is a poly(ethylene oxide)-10-hydroxy octadecanoic acid block copolymer.

10. The use of any one of claims 1 to 9, wherein the composition has a biodegradability at 28 days of at least 60% as measured according to the OECD 306 standard.

11. The use of any one of claims 1 to 10, wherein the mosquito larvae are *Aedes* mosquito larvae, *Anopheles* mosquito larvae, or *Culex* mosquito larvae, preferably *Aedes aegypti* mosquito larvae, *Anopheles stephensi* mosquito larvae, or *Culex quinquifasciatus* mosquito larvae.

12. A process for killing mosquito larvae, in particular in an aqueous medium, comprising the application of a composition on a surface of water, wherein said composition comprises:
- at least one oil having a kinematic viscosity at 40°C from 1.5 mm²/s to 4 mm²/s, a flash point from 80°C to 150°C and a pour point from -80°C to -50°C, having a boiling point in the range of from 200°C to 350°C,
wherein the amount of said oil is greater than 94% by weight in relation to the total weight of said composition, and
- at least one surfactant selected from the amphiphilic surface-active agents, wherein the amount of said surfactant is from 0.25% to 6% by weight in relation to the total weight of said composition.

13. The process of claim 12, wherein the composition is sprayed or poured on the surface of water.

14. A composition comprising:
- at least one oil having a kinematic viscosity at 40°C from 1.5 mm²/s to 4 mm²/s, a flash point from 80°C to 150°C and a pour point from -80°C to -50°C, having a boiling point in the range of from 200°C to 350°C,
wherein the amount of said oil is greater than 94% by weight in relation to the total weight of said composition, and
- at least one surfactant selected from the amphiphilic surface-active agents, wherein the amount of said surfactant is from 0.25% to 6% by weight in relation to the total weight of said composition.
